# EUROPEAN PATENT APPLICATION

(11) **EP 2 735 416 A1**
(43) Date of publication of application: **28.05.2014**
(21) Application number: 12814531.5
(22) Date of filing: 11.07.2012
(51) Int. Cl.: B29C 39/26, B29C 39/10, B29C 39/24, B29C 39/42, B29K 105/08, B29L 31/30

(54) **METHOD AND DEVICE FOR PRODUCING AT LEAST TWO PRODUCTS INCLUDING FIBER-REINFORCED RESIN**

(30) Priority: 21.07.2011 JP 2011159883
(71) Applicant: Mitsubishi Heavy Industries, Ltd., Tokyo 108-8215 (JP)
(72) Inventor: HATTORI, Hidetaka, Tokyo 108-8215 (JP); WATANABE, Akihisa, Tokyo 108-8215 (JP); HAYASHI, Noriya, Tokyo 108-8215 (JP)
(74) Representative: Henkel, Breuer & Partner
(86) International application number: PCT/JP2012/067664
(87) International publication number: WO 2013/011885

(57) **Abstract**

To provide a production method and a production device which are capable, in producing at least two products including a fiber reinforced resin, of easily impregnating a resin material into a fiber base material even if a volume of the product to be produced is large, by using a molding tool having a simple structure, and of easily performing control and management of a temperature and time for curing the resin material, and which enable easy cleaning of the molding tool. In order to produce a plurality of flat-shaped products including a fiber reinforced resin at the same time, first, a molding tool (11) is prepared, which is formed so that a plurality of cavity portions (12a, 12b) having the flat shape of the plurality of products is overlaid with each other via a foundry core (13). The respective cavity portions are provided with a fiber base material (1), a resin material is injected into the molding tool (11), the fiber base material (1) is impregnated with the resin material and the resin material is cured, and thus a plurality of products including a fiber reinforced resin is molded at the same time.

## Description

### TECHNICAL FIELD

The present invention relates to a method and a device configured to produce at least two products including a fiber reinforced resin.

### BACKGROUND ART

As a method for producing a fiber reinforced resin, a resin transfer molding (RTM) method has been publicly known. The RTM method is a method in which a resin is injected into a fiber base material previously arranged in a molding tool to impregnate the fiber base material with the resin, then the resin is cured, and thus a fiber reinforced resin is molded (for example, International Publication No. WO 2007/013544). In the RTM method, the entire surface of a fiber reinforced resin is covered with molding tools, and thus the molding accuracy is high in terms of the shapes and the surfaces of the fiber reinforced resin. Therefore, the RTM method is proposed as a method for producing structural members of aircraft, and the like.

### CITATION LIST

### PATENT LITERATURE

Patent Literature 1: International Publication No. WO 2007/013544

### SUMMARY OF INVENTION

### TECHNICAL PROBLEM

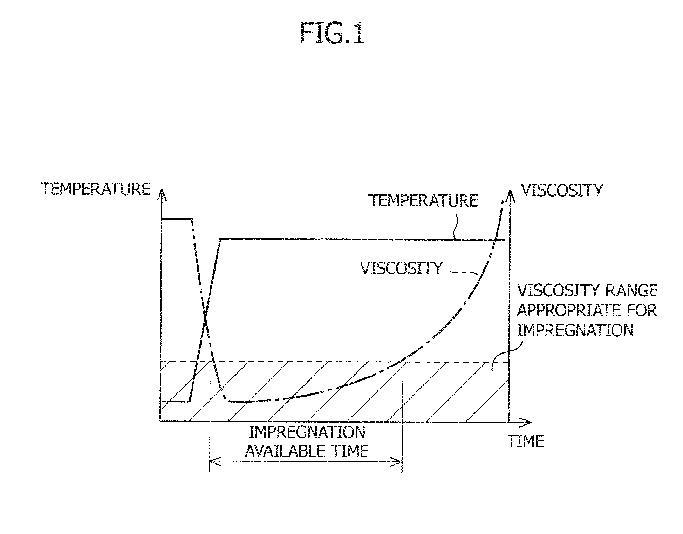

A variety of types of resins are used in the RTM method. For structural members for aircraft, thermosetting resins, such as epoxy resins, are often used. In injecting a thermosetting resin into a molding tool, in order to increase the impregnating ability of a resin material into a fiber base material, it is recommended to heat the resin material to reduce the viscosity of the resin material. However, as illustrated in Figure 1, if a thermosetting resin is heated, the viscosity of the resin increases after a given length of time has elapsed since the start of the heating because the cure reaction of the resin may progress, and the impregnating ability may therefore degrade. Accordingly, there is a problem such that it is difficult to mold a product having a complicated shape or a large volume by using the RTM method because the impregnation available time, in which a resin material is in a viscosity range appropriate for impregnation, is limited.

Similarly to the case of using an autoclave molding method, the RTM method requires the control and management of the temperature and time so that a uniform state of cure of the inside of the molding tool can be achieved. Particularly for parts of structural members for aircraft, a stringent quality control is required. Accordingly, the requirements for the control and the management of the temperature and the time may become severe.

Therefore, considering the above-described problems, it can be known that it is very difficult to mold a plurality of products with one molding tool at the same time in order to improve the productivity in the RTM method. To paraphrase this, firstly, the structure of the molding tool may become complicated and the volume of the product may become large, and it therefore becomes difficult to allow a sufficient amount of resin material to impregnate into a fiber base material. Secondly, the required control and the management of the temperature and the time based on which the curing state is determined may become more complicated and difficult to perform compared with a case of molding one product at one time. Thirdly, in addition to these problems, cleaning of the molding tool may require complicated work due to the complicated structure of the molding tool, which results in degraded ease of work.

Thus, in consideration of the above problems, the purpose of the invention is to provide a production method and a production device which are capable in producing at least two products including a fiber reinforced resin, of easily impregnating a resin material into a fiber base material even if a volume of the product to be produced is large, by using a molding tool having a simple structure, and of easily performing control and management of a temperature and time for curing the resin material, and which enable easy cleaning of the molding tool.

### SOLUTION TO PROBLEM

In order to achieve the above-described purpose, according to an aspect of the invention, a method for producing at least two flat-shaped products, each including a fiber reinforced resin, includes the steps of: providing a molding tool in which at least two cavity portions having the flat shapes of the at least two products are formed and superposed across a foundry core; arranging a fiber base material in each of the at least two cavity portions of the molding tool; injecting a resin material into the molding tool to impregnate the fiber base materials with the resin material; and forming the at least two products by curing the resin material.

Hereinbelow, a term "flat shape" (or "flat-shaped") refers to a shape obtained by squashing a product in one direction (i.e., in a direction of overlay of a plurality of products together). Accordingly, a product with a flat shape may have a shape in which a section thereof is bent or crimped as well as a shape in which the section thereof is flat. Examples of such a flat shape include shapes of which the section has the following shapes: a corrugated shape, a circular arc shape, a saucer-like shape, a cup-like shape, a hat-like shape, a comb-like shape, a T-shape, a V-shape, a W-shape, an M-shape, an N-shape, and a shape of which the section is E-shaped, F-shaped, S-shaped, Z-shaped, or L-shaped in the direction of overlay of products, and the like. Products with these shapes may be mutually overlaid in one line, or alternatively may be alternately arranged to be overlaid (i.e., overlaid in a mutually offset manner).

The at least two products may take mutually different shapes, but it is preferable that they have substantially the same shape. A chain-curing resin composition may be used for the resin material.

Each of the products may be a composite material including a lightweight core and a fiber reinforced resin which is adjacent to at least a part of a surface of the lightweight core. In this case, the fiber base material arranging step may include arranging a second foundry core and a fiber base material adjacently to the second foundry core inside each of the cavity portions. The second foundry core may include a part which has a shape substantially the same as a shape of a part of the lightweight core which is adjacent to the fiber reinforced resin. The product forming step may further include the steps of: separating a cured resin including the fiber base material molded by the molding tool from the second foundry core after the resin material is cured; and forming the composite materials by combining the lightweight core with the cured resin including the fiber base material. In the composite material according to the invention, the lightweight core and the fiber reinforced resin may be provided adjacently to each other either directly or via an adhesive.

In the composite material forming step, the lightweight core may be combined with the cured resin including the fiber base material at a location which the part of the second foundry core having substantially the same shape as the lightweight core was positioned when the foundry core was arranged.

According to another aspect of the invention, a device for producing at least two flat-shaped products, each including a fiber reinforced resin, includes: a molding tool configured to form the fiber reinforced resin by arranging fiber base materials inside at least two cavity portions having the flat shapes of the at least two products, injecting a resin material in the at least two cavity portions, impregnating the fiber base material with the resin material, and curing the resin material; and a foundry core located intermediately between the at least two cavity portions so that the at least two cavity portions are superposed across the foundry core.

Each of the products is a composite material including a lightweight core and a fiber reinforced resin which is adjacent to at least a part of a surface of the lightweight core. In this case, the device may further include a second foundry core inside the cavity portion. The second foundry core may include a part which has a shape substantially the same as a shape of a part of the lightweight core which is adjacent to the fiber reinforced resin. The part of the second foundry core having substantially the same shape as the lightweight core may be positioned, inside the cavity portion, at a location at which the lightweight core is positioned in the composite material.

### ADVANTAGEOUS EFFECT OF INVENTION

Thus, according to the invention, products including the fiber reinforced resin are limited to flat-shaped products and the cavity of the molding tool is formed so that a plurality of flat-shaped cavity portions of the products are overlaid with each other via the foundry core, and accordingly, a resin material can be easily impregnated into a fiber base material in a short period of time even if the structure of the molding tool is complicated and the volume of the product is large; the control and the management of a temperature and time for curing the resin material can be easily implemented; and the molding tool can be easily cleaned.

### BRIEF DESCRIPTION OF DRAWINGS

[Figure 1] Figure 1 is a graph showing a relationship among a temperature, a viscosity, and time when a resin material is impregnated during production of products including a fiber reinforced resin according to the present invention.
[Figure 2] Figure 2 is a flow chart showing an embodiment of a method for producing the products including a fiber reinforced resin according to the present invention.
[Figure 3] Figure 3 is a schematic diagram showing an embodiment of a device configured to produce products including a fiber reinforced resin according to the present invention.
[Figure 4] Figure 4 is a cross-sectional view schematically illustrating an embodiment of a molding tool of the device illustrated in Figure 3.
[Figure 5] Figure 5 is a cross-sectional view schematically illustrating an embodiment of a molding tool of the device illustrated in Figure 3.
[Figure 6] Figure 6 is a cross-sectional view schematically illustrating an embodiment of a molding tool of the device illustrated in Figure 3.
[Figure 7] Figure 7 is a cross-sectional view schematically illustrating an embodiment of a molding tool of the device illustrated in Figure 3.
[Figure 8] Figure 8 is a cross-sectional view schematically illustrating an embodiment of a molding tool of the device illustrated in Figure 3.
[Figure 9] Figure 9 is a cross-sectional view schematically illustrating an embodiment of a molding tool of the device illustrated in Figure 3.
[Figure 10] Figure 10 is a cross-sectional view schematically illustrating an embodiment of a molding tool of the device illustrated in Figure 3.
[Figure 11] Figure 11 is a cross-sectional view schematically illustrating a state of use of the molding tool illustrated in Figure 10 in step 210 of the production method illustrated in Figure 2.
[Figure 12] Figure 12 is a cross-sectional view schematically illustrating a product obtained in step 230 of the production method illustrated in Figure 2 by using the molding tool illustrated in Figure 10.
[Figure 13] Figure 13 is a cross-sectional view schematically illustrating an embodiment of a molding tool of the device illustrated in Figure 3.
[Figure 14] Figure 14 is a cross-sectional view schematically illustrating step 220 of the production method illustrated in Figure 2, which is carried out by using the fiber reinforced resin obtained with the molding tool illustrated in Figure 13.
[Figure 15] Figure 15 is a cross-sectional view schematically illustrating an embodiment of a molding tool of the device illustrated in Figure 3.
[Figure 16] Figure 16 is a cross-sectional view schematically illustrating step 230 of the production method illustrated in Figure 2 carried out when the molding tool illustrated in Figure 13 or 15 is used.

### DESCRIPTION OF EMBODIMENTS

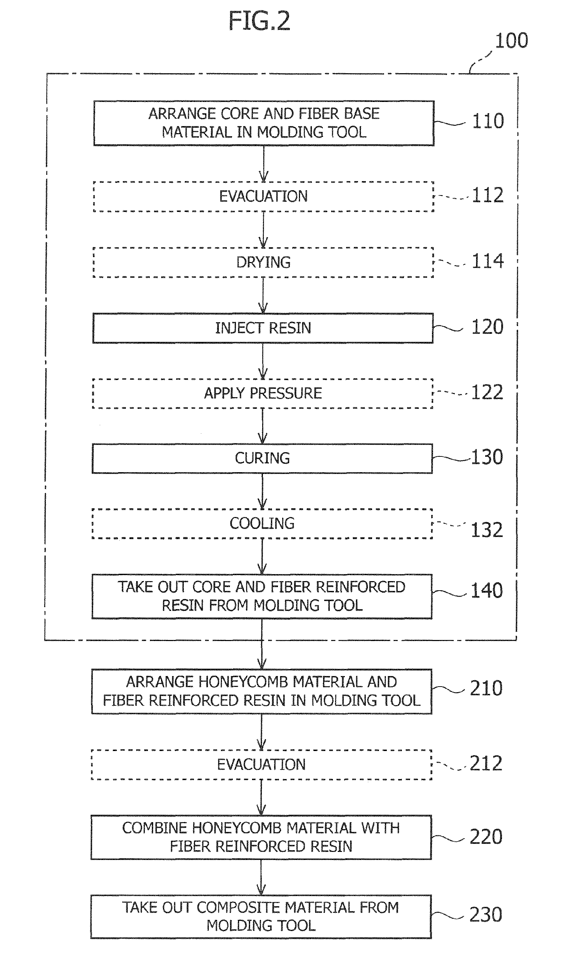

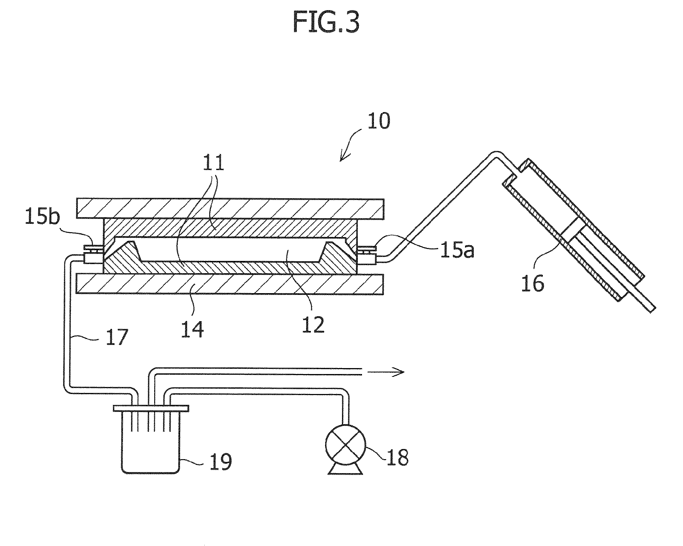

Embodiments of the present invention will be described below with reference to the attached drawings. As shown in Figure 2, in a production method 100 according to the present embodiment configured to produce a plurality of products including a fiber reinforced resin, step 110 for arranging a foundry core and a fiber base material in a molding tool is carried out first. As shown in Figure 3, an RTM molding device 10, which is an embodiment of the production device according to the present invention, includes a molding tool 11. A cavity 12 for molding a plurality of products is formed inside the molding tool 11. The RTM molding device 10 includes a pair of presses 14, which is provided outside the upper and the lower molding tools 11 and configured to sandwich the molding tools 11 to externally press the molding tools 11, however, alternatively, a different other mechanism capable of closing and fixing the molding tool 11 may be used. Any press is preferable because the mold clamping force can be easily adjusted.

The molding tool 11 is provided with a resin injection port 15a, which is provided on one end of the molding tool 11 and configured to inject a resin material into the cavity 12. The molding tool 11 is provided with a suction port 15b located on the other end of the molding tool 11. The resin injection port 15a is connected with a mechanism for injecting the resin material. The resin injection port 15a is connected with an injector 16, for example. It is preferable if the mechanism for injecting the resin material is provided with a function for applying pressure to the inside of the molding tool. The suction port 15b may be connected with a vacuum pump 18, and the like via a vacuum line 17. The vacuum line 17 may be provided with a vacuum trap 19 and the like to prevent the resin material from being suctioned into the vacuum pump 18.

The molding tool 11 will be described below in more detail. As illustrated in Figure 3, the molding tool 11 includes an upper mold 11a, a lower mold 11b, and a foundry core 13, which is located inside the cavity 12 formed by the two molds. The cavity 12 is divided into and includes two cavity portions 12a and 12b with sections having a flat shape and which are overlaid with each other via the foundry core 13. The cavity portions 12a and 12b are configured to mold one product, respectively. A sealer 17 for sealing mating surfaces is arranged between the upper mold 11a and the lower mold 11b.

As illustrated in Figure 3, a recess 13a formed on an edge of the foundry core 13 engages a projection 11c formed on an inner wall of the lower mold 11b, thereby fixing the foundry core 13 to the molding tool 11 at a predetermined location, but the present invention is not limited to this. Alternatively, the foundry core 13 may be fixed to the upper mold 11a, not to the lower mold 11b, at a predetermined location. Further alternatively, the foundry core 13 may be fixed at a predetermined location by using jigs, and the like.

Materials commonly used as mold materials can be used for the upper mold 11a, the lower mold 11b, and the foundry core 13. Examples of such materials include metals, such as aluminium, aluminum alloys, iron, and alloy steel such as stainless steel or invar; fiber reinforced resins; and glass. In addition, these materials can be constituted by adiabatic materials instead of the above-described nonadiabatic ones. The adiabatic material is not limited to a specific one; however, it is preferable to use a material of which the thermal conductivity is 0.3 W/(m·K) or lower; more preferably one with the thermal conductivity of 0.2 W/(m·K) or lower; and most preferably one with the thermal conductivity of 0.1 W/(m·K) or lower. Furthermore, it is preferable to use a material with a low volumetric specific heat for the material. For example, a material with a volumetric specific heat equal to or lower than that of aluminium is preferable. In addition, it is preferable to use a material with a small heat capacity for the material. For example, a material with a heat capacity equal to or less than that of aluminium is preferable. For example, a material constituted by a heat resisting surface made of a polymer film and an inside made of foam can be used.

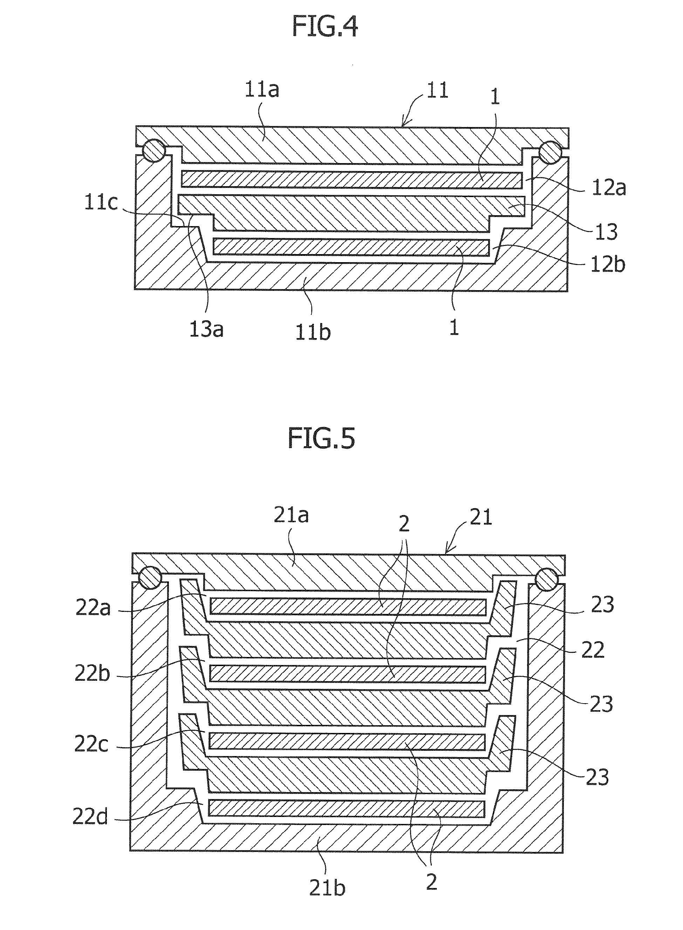

A flat-shaped fiber base material 1 is arranged inside the two cavity portions 12a and 12b, respectively. For the fiber base material 1, a wide variety of fibers for fiber reinforced resins, such as glass fibers, carbon fibers, and aramid fibers, can be used. Jigs and parts, such as nuts, and the like, may be attached to the fiber base material 1 where necessary. A release agent such as a peel ply (not illustrated) may be provided between the foundry core 13 and the fiber base material 1, where necessary. Alternatively, the surface of the foundry core 13 may be treated by releasing treatment. Further alternatively, the foundry core 13 may be constituted by a mold release material. The foundry core and the molding tool contacting the fiber base material 1 may be provided with a structure for fixing the fiber base material 1 at a predetermined location where necessary. For example, in Figure 4, the upper mold 11a, the lower mold 11b, or the foundry core 13 may be provided with such a structure. After placing the fiber base material 1 inside the molding tool 11 together with the foundry core 13, the upper mold 11a and the lower mold 11b are closed. After closing the molds, the molding tool 11, sandwiched by the presses 14, and the like, is pressed from outside the molding tool 11, where necessary.

Next, step 120 for injecting the resin material into the cavity 12 is carried out. Before the resin injection step, step 112 for evacuating the inside of the cavity 12 via the suction port 15b and the sealer 17 by using the vacuum pump 18 and the like, and step 104 for drying the fiber base material located inside the molding tool are carried out where necessary. It is particularly preferable to evacuate the inside of the cavity 12 until it reaches a vacuum state. In addition, the molding tool 11 may be warmed where necessary. If the molding tool 11 is to be warmed, it is warmed up to a predetermined temperature, such as an impregnation temperature or a drying temperature. Alternatively to the configuration illustrated in Figure 2 in which the drying step 114 is performed after the evacuation step 112, the evacuation step 112 may be performed after the drying step 114. The resin material may be preheated before its injection where necessary. Subsequently, the resin material is injected into the cavity 12 from the injector 16 and the like via the resin injection port 15a. The resin material may be preheated before its injection. The resin material flows inside the molding tool 11 via a resin flow path between the end of the foundry core 13 and the lower mold 11b, a resin flow path between the upper mold 11a and the lower mold 11b and the fiber base material 1, and a resin flow path between the foundry core 13 and the fiber base material 1 to immediately fill up the inside of the two cavity portions 12a and 12b. The upper mold 11a, the lower mold 11b, and the foundry core 13 may be respectively provided with resin flow paths, in which the resin material flows, where necessary.

Because the two cavity portions 12a and 12b have a flat-shaped section and are arranged in a mutually overlaid manner, the two cavity portions 12a and 12b can be easily filled with the resin material. Furthermore, the resin material easily impregnates into the fiber base material 1 arranged in the two cavity portions 12a and 12b, respectively. In this process, the vacuum piping may be closed and pressure may be applied by using a mechanism for injecting the resin material, i.e., the injector 16 and the like, for example, where necessary. By applying pressure by means of the injector 16 and the like, the impregnation of the resin material can be promoted. Furthermore, after the inside of the cavity 12 is filled with the resin material, the suction port 15b may be closed and the pressure inside the cavity 12 may be increased with the pressure from the resin injection port 15a, where necessary (step 122). The pressure may be increased preferably by 3 atmospheres or higher, more preferably by 5 atmospheres or higher, and most preferably by 10 atmospheres or higher. The level of pressure inside the cavity 14 is not limited by a specific upper limit; however, the pressure of 100 atmospheres or lower is preferable. After the fiber base material 1 is impregnated with the resin material, the molding tool 11 may be further clamped by using the presses 14 where necessary.

Subsequently, step 130 for curing the injected resin material is carried out. The curing is carried out by applying heat, ultraviolet (UV) rays, or both to the resin material, depending on the characteristic of the resin material to be used. The application of heat can be implemented by using the press 14 and the like or by a heating function included in a heater or the like incorporated in the molding jigs, for example. The irradiation of the UV rays can be implemented by using a UV lamp (not illustrated). Because the sections of the two cavity portions 12a and 12b, into which the resin material has been injected, have a flat shape and these cavity portions are arranged in a mutually overlaid manner, it is possible to easily perform the control and the management of the temperature and time for heating for curing the resin material. After the resin material is cured, the product including the fiber reinforced resin is taken out from the molding tool 11.

Although the molding tool 11 has a complicated structure to mold two products, the molding tool 11 can be easily cleaned because the two cavity portions 12a and 12b are formed via the foundry core 13, which is removed from the upper mold 11a and the lower mold 11b.

The resin material to be used is not limited to a material of a specific type. However, it is preferable to use a chain-curing resin composition. A "chain-curing resin composition" is a resin with characteristics such that its curing starts when heat is applied thereto or when it is irradiated with energy rays such as UV rays or the like; that cure reaction heat is generated in the process of curing, a cure reaction progresses as a chain reaction due to the generated cure reaction heat, and thus, the cure reaction heat is serially generated; and that the cure reaction progresses as a chain reaction due to self-generated heat generated during the cure reaction without being irradiated with energy rays and regardless of whether a energy-ray shielding substance is present or not in a composition (Japanese Patent Application Publication No. 11-193322, Japanese Patent No. 3950241, and Japanese Patent No. 3944217).

For the chain-curing resin composition like this, a resin composition can be used, which is produced by mixing a photopolymerization resin component, such as a photopolymerization oligomer, a photopolymerization monomer, and the like, and a polymerization starter component composed of binary or higher polymers constituted by a photopolymerization starter and a photothermal polymerization starter for starting both photopolymerization and thermal polymerization, for example. For the photopolymerization resin component, a cationic resin is preferable; an epoxy resin is more preferable; and a cycloaliphatic epoxy resin, a glycidyl ether type epoxy resin, and an epoxidized polyolefin resin are yet more preferable. For the photopolymerization starter, a diazonium salt, an iodonium salt, a pyridinium salt, a phosphonium salt, a sulfonium salt, an iron-allene compound, and a sulfonate are preferable. For the photothermal polymerization starter, an aryl-based sulfonium salt is preferable. It is preferable if 0.5 to 6.0 parts by weight of the polymerization starter component is included for 100 parts by weight of the photopolymerization resin component. It is preferable if the weight ratio of the photothermal polymerization starter to the photopolymerization starter is in the range of 1 to 4.

In addition, for the chain-curing resin composition, a resin composition, which is produced by mixing a photopolymerization resin component with a photopolymerization starter component and a curing agent component used in cold-setting or hot-setting a photopolymerization resin component, for example, can be used (Japanese Patent Application Publication No. 2001-89639, Japanese Patent No. 4108094, and Japanese Patent No. 4241721). In this resin composition, an epoxy resin with a cyclic ether structure as its molecular structure is preferable as the photopolymerization resin component. For the photopolymerization starter component, an iron-allene-based compound and a sulfonium salt are preferable. For the curing agent component, an acid anhydride is preferable. It is preferable if the curing agent component is mixed with the photopolymerization resin component at the ratio of 0.1 to 1.4 mol of the curing agent component to 1 mol of the photopolymerization resin component. In addition, it is preferable if the components of the resin composition other than the photopolymerization starter component is mixed with the photopolymerization starter component at the ratio of the total weight of 100 parts by weight of such other components to 0.1 to 6.0 parts by weight of the photopolymerization starter component.

Furthermore, for the chain-curing resin composition, a resin composition including a cycloaliphatic epoxy having two cyclohexane oxides in a molecule and a denatured bisphenol A-type epoxy resin and of which the content of the cycloaliphatic epoxy is 25 to 90% by mass when the total amount of the above-described two components is taken as 100% by mass, for example, can be used, and a resin composition including a cycloaliphatic epoxy having two cyclohexane oxides in a molecule, a denatured bisphenol A-type epoxy resin, and a liquid bisphenol A type epoxy resin and of which the content of the cycloaliphatic epoxy is 25 to 90% by mass when the total amount of the above-described three components is taken as 100% by mass, for example, can be used (Japanese Patent Application Publication No. 2011-079989).

By using the chain-curing resin composition like this, heat and energy such as UV rays are applied to induce a chain cure reaction, and thereby the resin material in the molding tool 11 can be cured. Even if the foundry core 13 has a shape with which it becomes difficult to apply curing energy uniformly to the entire resin material, the curing of the entire resin material can be completed in a short period of time because during the chain cure reaction, the cure reaction progresses as a chain reaction due to the self-generated heat. With respect to the cure time, although it varies according to the dimension of the material to be molded, the thickness of the plate, the type of the resin, and the like, it takes about one to ten minutes from the start of the chain curing to the completion of the curing in the case of a common carbon-fiber-reinforced plastic (CFRP) which is about 1 m long and wide and about 2 mm thick, for example. In performing the curing, the resin material may be cured to reach its handleable state. For example, if the cured resin material including the fiber base material is in a state in which the resin material maintains its shape at room temperature, the resin material is in a handleable state. When the chain cure reaction is complete, the chain-curing resin composition is cured to reach the handleable state described above.

After the resin injection step, step 130 for curing the injected resin material is carried out. The curing in the curing step 130 includes semi-curing. The term "semi-curing" herein refers to the state of curing in which the resin material has been solidified but the crosslinking reaction has not been complete yet, in which state the resin material has been cured and reached its handleable state. Of course, in this curing step 130, the resin material may be completely cured. The temperature set when heat is used in the curing step 130 is different according to the composition of the resin material and a catalyst to be used. More specifically, the temperature of 80 to 250°C is preferable, the temperature of 110°C or higher is more preferable, and the temperature of 150°C or higher is yet more preferable. In addition, by using a nonadiabatic material for the molding tool 11 and the foundry core 13, the temperature of the resin material for its curing can be easily controlled.

After the curing step 130, step 140 for taking out the foundry core and the fiber reinforced resin from the molding tool is carried out. Before the take-out step 140, step 132 for cooling the molding tool is carried out where necessary. For the cooling, cooling equipment such as water cooling equipment (not illustrated), for example, can be used. By cooling the molding tool 11, the handling of the molding tool 11 and the taking out of the foundry core 13 and the fiber reinforced resin from the molding tool 11 can be safely and easily performed.

For the resin material, a curable resin and a thermoplastic resin can be used as well as a chain-curing resin composition. For the curable resin, an epoxy resin, a phenol resin, a bismaleimide resin, a polyimide resin, an unsaturated polyester resin, a benzoxazine resin, and the like, for example, can be used. If the curable resin is to be heated in the curing step 130, the temperature of the heat to be applied is preferably in the range of 100 to 350°C, although this may be differently determined according to the composition of the curable resin. For the thermoplastic resin, a poly(phenylene sulfide) (PPS) resin, a poly(etheretherketone) (PEEK) resin, a polyetherketoneketone (PEKK) resin, a polyetherketone (PEK) resin, a polyimide (PI) resin, a polyetherimide (PEI) resin, a polyamide (PA), and the like can be used, for example.

The molding tool 11 is not limited to the embodiment illustrated in Figure 4 and the configuration of respective embodiments illustrated in Figures 5 to 9 can be employed. For example, as shown in Figure 5, four cavity portions 22a to 22d having a flat section are formed in a molding tool 21 at a location between an upper mold 21a and a lower mold 21b via three cores 23 in a mutually overlaid manner. If the four cavity portions 22a to 22d are formed in the above-described manner, the resin material flows in the resin flow path between the edge of the foundry core 23 and the lower mold 21b to immediately fill up the four cavity portions 22a to 22d in parallel order. Thus, if four products are to be produced at the same time, the four products can be easily molded at the same time, similarly to the case of the configuration of the above-described embodiment, because the resin material is allowed to easily impregnate into four fiber base materials 2 arranged in the cavity portions, respectively. The number of products to be molded at the same time is not limited to a specific number. However, because the efficiency of heating and cooling may degrade and greater unevenness among the products may occur if the distance between the heaters and that between the water-cooling mechanisms become excessively great, it is preferable if the distances are appropriately adjusted according to the characteristics of the products. For example, the distance between the heaters is preferably 1 m or less and more preferably 50 cm or less.

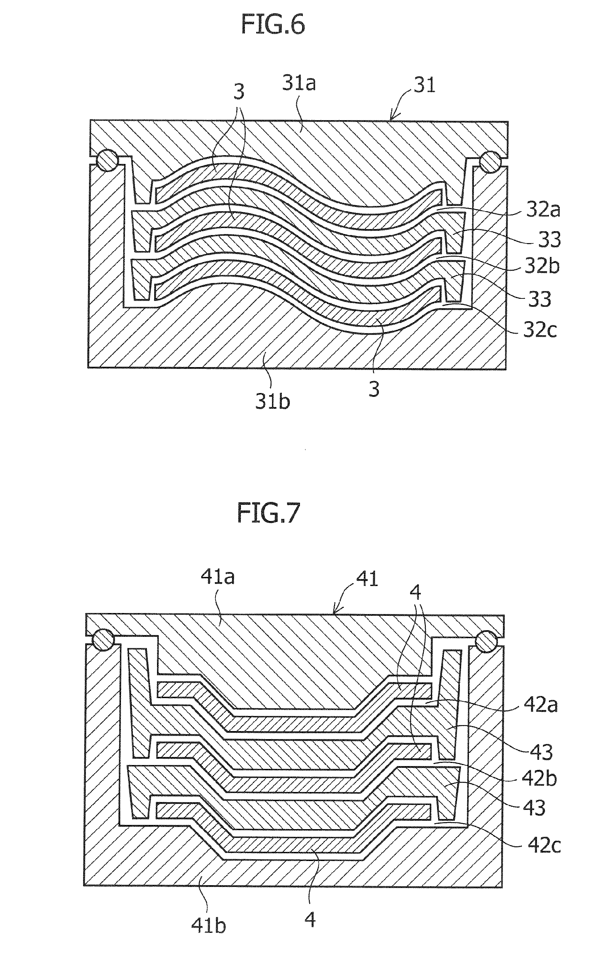

Furthermore, as shown in Figure 6, in a molding tool 31, a section of each of a plurality of cavity portions 32a to 32c to be mutually overlaid has a shape bent in the corrugated shape. The resin material easily fills up the inside of the plurality of cavity portions 32a to 32c even if the section of each cavity portion has such a corrugated shape similarly to the case in which the section of each cavity portion has a flat shape, and thus fiber base materials 3 arranged in respective cavity portions are impregnated with the resin material. Accordingly, in this case also, the same effect as that achieved in the case in which the section of each cavity portion has a flat shape can be achieved.

As shown in Figure 7, in a molding tool 41, a plurality of cavity portions 42a to 42c of which the section has a shape bent in the shape of a hat is formed. The resin material easily fills up the inside of the plurality of cavity portions 42a to 42c even if the section of each cavity portion has such a hat-like shape similarly to the case in which the section of each cavity portion has a flat shape, and thus fiber base materials 4 arranged in respective cavity portions are impregnated with the resin material. Accordingly, in this case also, the same effect as that achieved in the case in which the section of each cavity portion has a flat shape can be achieved.

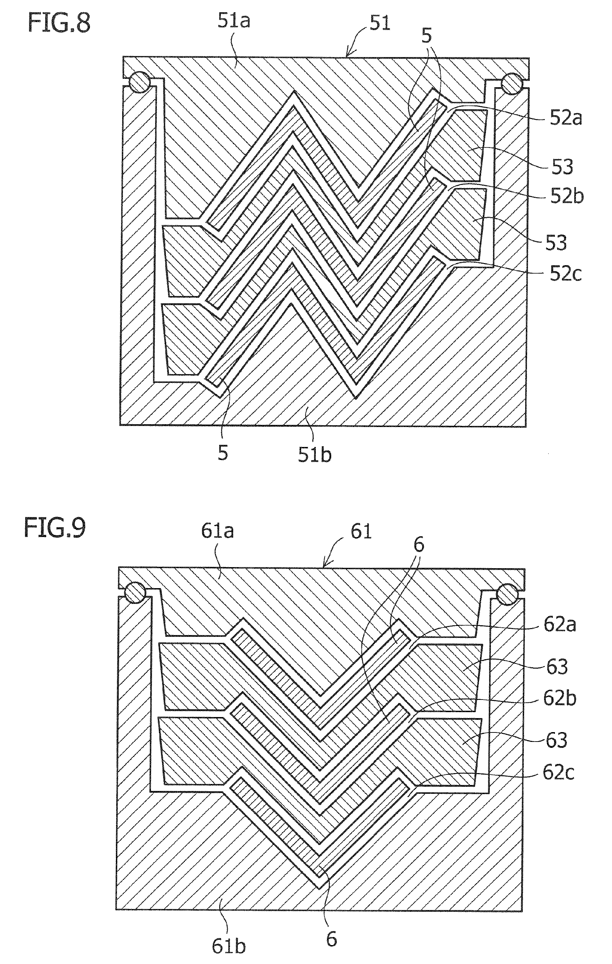

As shown in Figure 8, in a molding tool 51, a plurality of cavity portions 52a to 52c of which the section has a shape bent in the N-like shape is formed. The resin material easily fills up the inside of the plurality of cavity portions 52a to 52c even if the section of each cavity portion has such a N-like shape similarly to the case in which the section of each cavity portion has a flat shape, and thus fiber base materials 5 arranged in respective cavity portions are impregnated with the resin material. Accordingly, in this case also, the same effect as that achieved in the case in which the section of each cavity portion has a flat shape can be achieved.

As shown in Figure 9, in a molding tool 61, a plurality of cavity portions 62a to 62c of which the section has a shape bent in the V-like shape is formed. The resin material easily fills up the inside of the plurality of cavity portions 62a to 62c even if the section of each cavity portion has such a V-like shape similarly to the case in which the section of each cavity portion has a flat shape, and thus fiber base materials 6 arranged in respective cavity portions are impregnated with the resin material. Accordingly, in this case also, the same effect as that achieved in the case in which the section of each cavity portion has a flat shape can be achieved.

Furthermore, according to the present invention, a plurality of composite materials including a lightweight core and a fiber reinforced resin adjacent to at least a part of a surface of the lightweight core can be produced as the products at the same time. Embodiments of a method for producing the products will be described below with reference to Figure 1 and Figures 10 to 12.

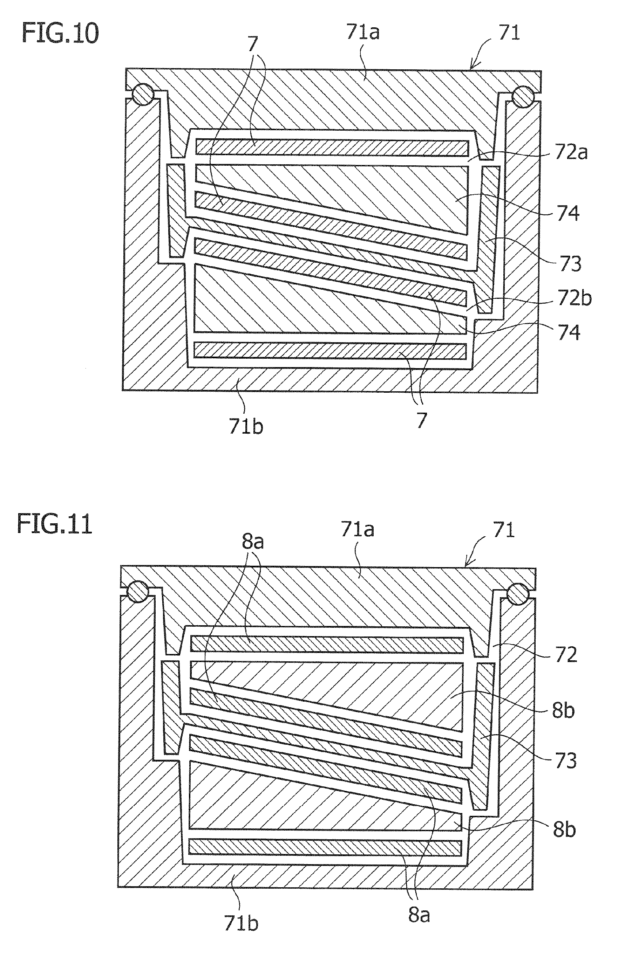

In the present embodiment, as is different from the above-described embodiment, two types of cores are arranged in the molding tool in step 110 of the flow chart illustrated in Figure 1. As shown in Fig. 10, a molding tool 71 used in the present embodiment includes an upper mold 71a, a lower mold 71b, and a first foundry core 73. Two cavity portions 72a and 72b having the shape of the composite material to be molded are formed by the above-described molds and the first foundry core. In addition, the molding tool 71 includes a second foundry core 74, which has a shape substantially the same as a shape ofa portion in which the lightweight core included in the composite material to be molded is adjacent to the fiber reinforced resin. The second foundry core 74 is arranged in each cavity portion 72a, 72b at a location corresponding to the lightweight core included in the composite material to be molded. The second foundry core 74 is fixed at a predetermined location due to the configuration of the upper mold 71a, the lower mold 71b, and the first foundry core 73 or by using jigs, or the like, although not particularly illustrated in the drawing.

In each cavity portion 72a, 72b, a fiber base material 7 is arranged at a location of the fiber reinforced resin of the composite material to be molded. A release agent such as a peel ply (not illustrated) may be provided between the second foundry core 74 and the fiber base material 7, where necessary. Alternatively, the surface of the second foundry core 74 may be treated by releasing treatment. Further alternatively, the second foundry core 74 may be constituted by a mold release material.

Next, step 120 for injecting the resin material into the cavity is carried out as illustrated in Figure 2. Step 112 for evacuating the inside of the molding tool is carried out before the resin injection step, where necessary. It is particularly preferable to evacuate the inside of the cavity until it reaches a vacuum state. Moreover, step 114 for drying the fiber base material inside the molding tool is performed as illustrated in Figure 2 where necessary. The drying can be implemented by heating the molding tool 71 by means of the press 14 as described above. The molding tool 71 may be heated up to the impregnation temperature for the resin material where necessary. In the present embodiment also, the evacuation step 112 may of course be carried out after the drying step 114. The resin material may be preheated before its injection where necessary.

The resin material injected into the respective cavity portions 72 then impregnates into the respective fiber base materials 7. In this process, the resin material is pressurized where necessary. Thus, the impregnation of the resin material can be promoted. Furthermore, the suction port 15b may be closed and the pressure inside the cavity 72 may be increased with the pressure from the resin injection port 15a (step 112 illustrated in Figure 1). After the fiber base material 7 is impregnated with the resin material, the molding tool 71 may be further clamped by using the press 14 where necessary.

After the resin injection step, step 130 for curing the injected resin material is carried out. The curing in the curing step 130 includes semi-curing. Of course, in this curing step 130, the resin material may be completely cured.

After the curing step 130, step 140 for taking out the two types of cores and the fiber reinforced resin from the molding tool is carried out as illustrated in Figure 2. The upper mold 71a is removed, the molding tool 71 is opened, and the cured resin including the fiber base material molded by the molding tool 71, i.e., the fiber reinforced resin, and the second foundry core 74 are taken out. Then the fiber reinforced resin and the second foundry core 74 are separated. If a peel ply has been arranged between them, the peel ply is also separated.

Before the take-out step 140, step 122 for cooling the molding tool 71 is carried out where necessary. The cooling is performed in a manner similar to that in the above-described embodiment.

After the fiber reinforced resin is separated, step 210 for arranging a honeycomb material and the fiber reinforced resin in the molding tool is carried out. As shown in Figure 11, a honeycomb material 8b is arranged at a location in the molding tool 71 at which the second foundry core is arranged, and a fiber reinforced resin 8a is arranged at a location at which the fiber base material is arranged. The lightweight core is not limited to the honeycomb material 8b. In other words, any lightweight core capable of reducing the weight of the composite to be molded can be used. For example, a foam resin member such as ROHACELL^{®} can be used. A film adhesive (not illustrated) may be disposed between the honeycomb material 8b and the fiber reinforced resin 8a, where necessary. For the adhesive, an epoxy resin-based adhesive and the like can be used. In addition, for the adhesive, the same resin composition as that used for the resin material can be used. For example, the above-described chain-curing resin composition may be used.

After the honeycomb material 8b and the fiber reinforced resin 8a are placed in the molding tool 71, the upper mold 71a and the lower mold 71b are closed. After the molds are closed, the molding tool 71 is sandwiched by the press 14 placed outside the upper mold 71a and the lower mold 71b to press the molding tool 71 from the outside thereof, where necessary.

After placing the honeycomb material and the fiber reinforced resin, step 212 for evacuating the inside of the molding tool is carried out as illustrated in Figure 9, where necessary. The evacuation can be implemented by decompressing the inside of the molding tool 71 by means of the vacuum pump 18 until it reaches a vacuum state as described above in the description of the evaluation step 112.

Next, step 220 for combining the honeycomb material and the fiber reinforced resin together is carried out. As shown in Figure 11, because the fiber reinforced resin 8a has been already cured in the curing step 130, the inflow of the resin into the holes on the surface of the honeycomb material 8b can be prevented even if the fiber reinforced resin 8a has come into direct contact and been integrated with the honeycomb material 8b.

The combination can be implemented by applying heat to the molding tool 71 with the presses 14 and heaters (not illustrated) incorporated in the molding tool 71, for example. If the fiber reinforced resin 8a is in the semi-cured state, the honeycomb material 8b and the fiber reinforced resin 8a can be adhered and integrated together by heating the fiber reinforced resin 8a until it is completely cured, for example. For example, if the adhesive is used and if it is a thermosetting adhesive, the honeycomb material 8b and the fiber reinforced resin 8a can be adhered and integrated together by heating the adhesive up to the curing temperature for the adhesive or higher. In addition, by performing this heating, the post-curing of the fiber reinforced resin in the semi-cured state and the curing of the adhesive can be performed at the same time, which thus enables improvement of the quality of adhesion and reduction of the production time. When the adhesive is not a thermosetting adhesive, the honeycomb material and the fiber reinforced resin can be adhered and integrated together without particularly heating the adhesive.

In addition, by heating the molding tool 71 in the combination step 220, the accuracy of integration of a composite material can be further improved. Particularly if the fiber reinforced resin 8a in the semi-cured state is used, the accuracy of integration of the composite material can be improved. The heating temperature in the combination step 220 is preferably a glass transition temperature for the fiber reinforced resin 8a or higher. By heating the molding tool 71 up to the glass transition temperature for the fiber reinforced resin 8a or higher, the resin component of the fiber reinforced resin 8a softens, thereby the surface of the fiber reinforced resin 8a deforms along with the shape of the honeycomb material 8b, and thus the accuracy of molding of the composite material can be improved. In this regard, for the fiber reinforced resin 8a in the semi-cured state, it is preferable to use a resin composition for which the glass transition temperature is preferably in the range of 80 to 200°C and more preferably in the range of 80 to 150°C.

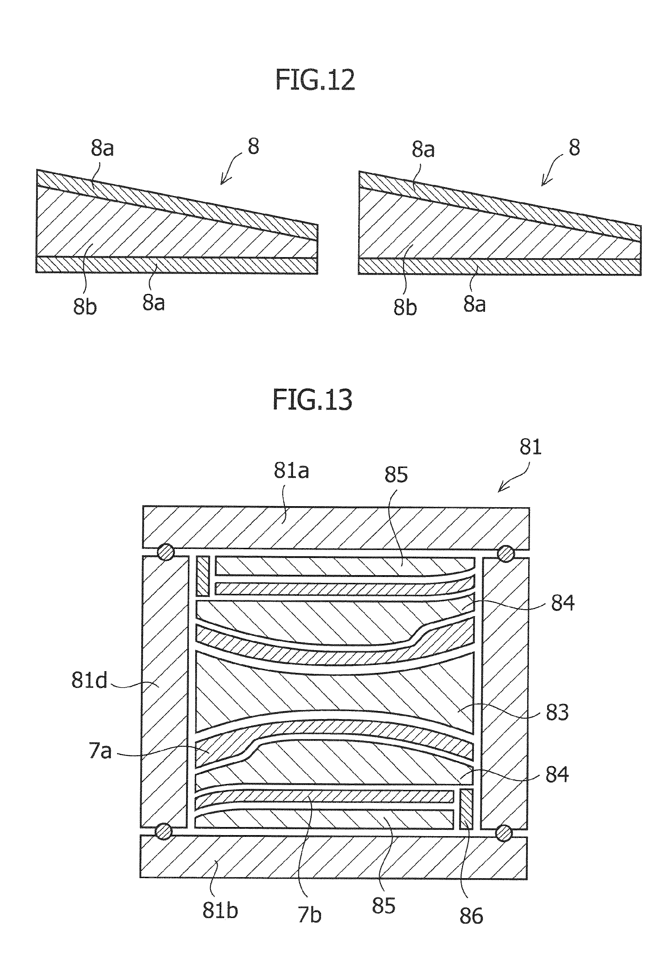

Then step 230 for taking out the composite material from the molding tool is carried out as illustrated in Figure 2. As shown in Figure 12, the upper mold 71a is opened and two composite materials 8, which have a three-layer structure including a core layer of the honeycomb material 8b and two-layered fiber reinforced resins 8a, which sandwich the honeycomb material 8b from both sides thereof, are taken out from the molding tool. Because the composite materials 8 include the adhesive only where necessary in addition to the fiber reinforced resin 8a and the honeycomb material 8b, the weight of the composite material does not increase. In addition, because the fiber reinforced resin 8a is molded with the molding tool 71 for molding the composite material in steps 110 to 140, the fiber reinforced resin 8a has stable dimensions and can thus be easily fitted with the honeycomb material 8b, and thereby the composite material 8 with a high molding accuracy can be obtained. Furthermore, by employing the RTM method described above, the composite material can be produced at a higher production rate compared with the case of using a molding method which uses a prepreg.

In the embodiment illustrated in Figures 10 to 12, an example is described in which the composite materials 8, which have a three-layer structure including the honeycomb material 8b and two pieces of fiber reinforced resin 8a that sandwich the honeycomb material 8b from both sides thereof, are produced. However, the present invention is not limited to this. For example, according to the present invention, composite materials with a two-layer structure, in which one piece of fiber reinforced resin is provided adjacently to one surface of a honeycomb material, can be produced. In addition, according to the present invention, composite materials having a multi-layer structure in which the entire periphery of a honeycomb material is covered with a fiber reinforced resin can be produced.

Moreover, in the present embodiment, the composite materials 8 are produced by using the second foundry core 74 having an entire shape substantially the same as the shape of the honeycomb material 8b. However, the present invention is not limited to this. For example, according to the present invention, composite materials can be produced by using a foundry core which includes a part having a shape substantially the same as the shape of a honeycomb material. In this case, the honeycomb material is arranged at a location of the part having the shape substantially the same as the shape of the honeycomb material, among the locations at which the foundry cores are arranged, and hollow members and solid members are arranged in the other parts of the foundry core. Thus, composite materials including a honeycomb material, hollow or solid members, and a fiber reinforced resin provided adjacently thereto can be obtained.

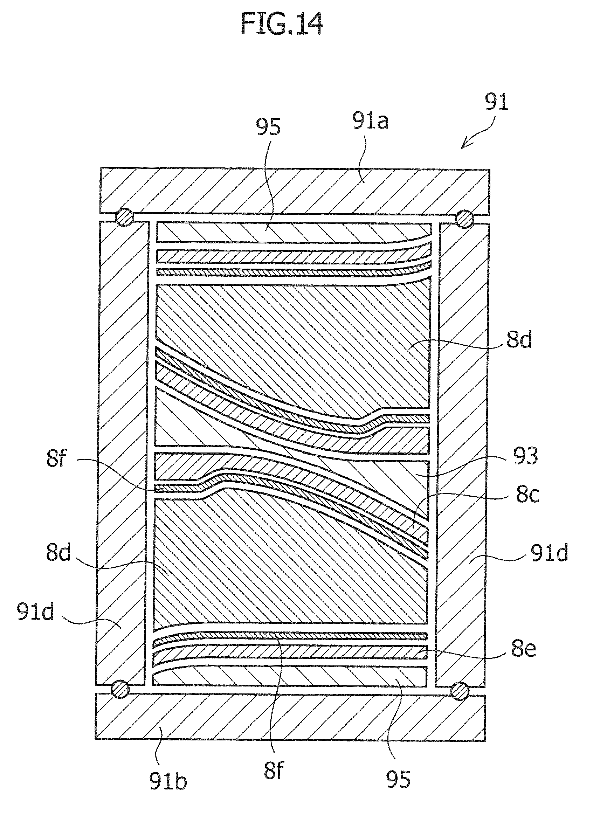

In addition, composite materials can also be produced by using a foundry core which includes a part having a shape substantially the same as the shape of the part in which the honeycomb material is adjacent to the fiber reinforced resin, for example. In this case, as shown in Figures 13 and 14, composite materials molded by a molding tool 91 includes a thick honeycomb material 8d. On the other hand, for a molding tool 81 for molding fiber reinforced resins 8c and 8e included in the composite material, a second foundry core 84 is thinner than the honeycomb material 8d while maintaining the shape of the surface of the second foundry core 84 substantially the same as the shape of a part in which the honeycomb material is adjacent to the fiber reinforced resin. As illustrated in Figure 13, in order to further reduce the thickness of the second foundry core 84, the angle between the two pieces of fiber reinforced resins molded by the molding tool 81 can be changed to the angle between the two-layer fiber reinforced resins of the composite material.

Thus, with the second foundry core 84 having the dimension smaller than that of the honeycomb material 8d, the energy required for the molding of the fiber reinforced resin in the molding tool 81 can be reduced, the control of the temperature inside the molding tool 81, which is implemented in the curing step 130 and the like, can be easily performed, and furthermore, it becomes easy to handle the second foundry core 84.

In the embodiment illustrated in Figures 1 to 12, the upper mold and the lower mold directly have the molding surfaces for the products. However, the present invention is not limited to this. For example, as shown in Fig. 13, a third core 85, which is adjacent to an upper mold 81a and a lower mold 81b, may have molding surfaces for products to be molded. Alternatively, a frame mold 81d having a cylindrical shape may be provided between the upper mold 81a and the lower mold 81b. It is preferable if the third core 85 is fixed to the upper mold 81a or the lower mold 81b. Alternatively, it is preferable if the third core 85 is integrated with the upper mold 81a or the lower mold 81b. With respect to a method for fixing the third core 85 to the upper mold 81a or the lower mold 81b, joint surfaces between the third core 85 and the upper mold 81a or the lower mold 81b may be directly jointed by means of bolts or pins (not illustrated), for example. Further alternatively, the third core 85 may be fixed to the frame mold 81d.

In addition, if the angle between the two pieces of fiber reinforced resins molded by the molding tool 81 is different from the angle between the two-layered fiber reinforced resins included in the composite material, one fiber reinforced resin becomes shorter than the other in the molding tool 81 as illustrated in Figure 13. Accordingly, a fourth core 86 may be provided adjacently to the frame mold 81d in order to mold the shorter fiber reinforced resin into a predetermined shape. Figure 14 illustrates a film adhesive 8f, which is arranged, in the molding tool 91 configured to mold composite materials, between the honeycomb material 8d and the fiber reinforced resin 8c, 8e where necessary.

If the dimensions of the honeycomb material 8d and the second foundry core 84 are different from each other, the molding tool 81 used in the series of steps 110 to 140 for molding the fiber reinforced resin and the molding tool 91 used in the combination step 220 are different from each other in terms of the heights of the frame molds 81d and 91d. Furthermore, if the angle between the two pieces of fiber reinforced resins molded by the molding tool 81 is different from the angle between the two-layered fiber reinforced resins included in the composite material, the molding tool 81 used in steps 110 to 140 and the molding tool 91 used in step 220 are different from each other in terms of the shapes of the first foundry cores 83 and 93. The widths of the upper mold 81a, 91a and the lower mold 81b, 91b are different from each other in this case. However, the widths of the upper mold 81a, 91a and the lower mold 81b, 91b can be configured to be the same as each other by arranging a fourth core provided adjacently to the frame mold 81d, 91d in the molding tools 81d, 9 1 d and by adjusting the dimension of the fourth core.

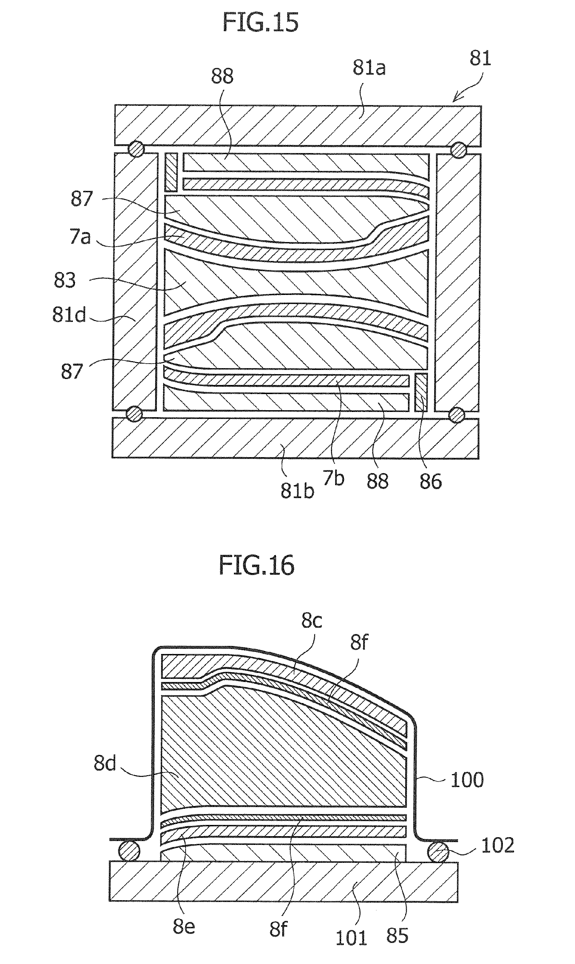

Furthermore, in each embodiment illustrated in Figures 10 to 12 and Figures 13 and 14, in producing composite materials including a core layer of a honeycomb material sandwiched by two-layered fiber reinforced resins, the second foundry core 74, 84 only, which is located between the fiber reinforced resins, has a shape substantially the same as the shape of the part in which the honeycomb material is adjacent to the fiber reinforced resin in the molding tools 71, 81. However, the present invention is not limited to this. For example, as shown in Figure 15, which illustrates a modification of the example illustrated in Figure 13, the molding tool 81 may be configured so that the molding shape for one fiber reinforced resin is configured to be upside down from that of the above-described example and that a third core 88, which is provided adjacently to the upper mold 81a or the lower mold 81b, has a shape substantially the same as the shape of the part in which the honeycomb material 8d is adjacent to the fiber reinforced resin 8c, 8e. In this case, a second foundry core 87, which is sandwiched between two pieces of fiber reinforced resins to be molded, has a shape substantially the same as the shape of a part in which the honeycomb material 8d is adjacent to the other fiber reinforced resin and also has a surface for molding the composite materials.

Furthermore, in the embodiment described above, in steps 210 to 230, composite materials are produced by combining the honeycomb material with the fiber reinforced resin by means of the molding tool 91. However, the present invention is not limited to this. More specifically, as shown in Figure 16, which illustrates a modification of the example illustrated in Figure 14, composite materials in which the honeycomb material 8d and the fiber reinforced resin 8c, 8e are integrated together can be produced also by arranging the honeycomb material 8d and the fiber reinforced resin 8c, 8e at predetermined locations, enclosing the same into a bag 100 constituted by a material such as a sheet material or a film material, and heating the bag by means of an oven, an autoclave, or the like (not illustrated). The fiber reinforced resin 8c, 8e to be enclosed in the bag 100 is molded by the molding tools by using the foundry core having a shape substantially the same as the shape of a part in which the honeycomb material 8d is adjacent to the fiber reinforced resin. Accordingly, composite materials having a predetermined shape can be obtained without using a molding tool in the combination of the fiber reinforced resin 8c, 8e with the honeycomb material 8d. Alternatively, the bag 100 may be hermetically sealed via a lower mold 101 and a sealant 102 as illustrated in Figure 16. Further alternatively, a foundry core having a surface for molding composite materials used in the molding tool, i.e., the third core 85 in this example, may be arranged in the lower mold 101 where necessary. Yet further alternatively, the third core 85 and the lower mold 101 may be integrally provided where necessary. If the combination is implemented by using the bag like this, composite materials including the honeycomb material and the hollow or solid members can be obtained similarly to the case in which the combination is implemented by using the molding tool. Furthermore, the present invention is not limited to the case in which the shape of the entire core is the same as the shape of the entire honeycomb material. More specifically, the foundry core may include a part having a shape that is the same as that of the part in which the honeycomb material is adjacent to the fiber reinforced resin.

In addition, as the configuration of the second foundry core 74, 84 included in the molding tool 71, 81, a heating function can be imparted by providing the foundry core with a heater or the like (not illustrated), for example. Thus, the heating of the molding tools in the drying step 114 and the heating of the resin material in the curing step 130 can be promoted. In addition, by providing the foundry core with a water-cooling element, a Peltier element, or the like, for example, a cooling function can be imparted. Thus, the cooling of the molding tools in the cooling step 132 can be promoted.

The second foundry core 74, 84 included in the molding tool 71, 81 may be a foundry core which takes a shape substantially the same as the shape of the lightweight core by expansion or contraction due to heating, etc. in the process from the arrangement step 110 to the curing step 130. Such an expansion function and a contraction function can be imparted by forming the foundry core by using a metal with a high coefficient of linear expansion such as aluminium, a rubber with a high coefficient of linear expansion, a silicone bag, etc., for example. Alternatively, the foundry core 74, 84 of the molding tool 71, 81 may be a foundry core which takes a shape substantially the same as the shape of the lightweight core when a part of the foundry core is melted. For the material of the part to be melted, a water soluble resin, a wax packed with a film, and the like can be used, for example.

### REFERENCE SIGNS LIST

- 1 to 7:: Fiber base material
- 8:: Composite material
- 8a, 8c, 8e:: Fiber reinforced resin
- 8b, 8d:: Honeycomb material
- 10:: RTM molding device
- 11, 21, 31, 41, 51, 61, 71, 81, 91:: Molding tool
- 11a, 21a, 31a, 41a, 51a, 61a, 71a, 81a, 91a:: Upper mold
- 11b, 21b, 31b, 41b, 51b, 61b, 71b, 81b, 91b:: Lower mold
- 12, 22, 32, 42, 52, 62, 72, 82:: Cavity
- 13, 23, 33, 43, 53, 63:: Core
- 14:: Press
- 15a:: Resin injection port
- 15b:: Suction port
- 16:: Injector
- 17:: Vacuum line
- 18:: Vacuum pump
- 19:: Vacuum trap
- 73, 83, 93:: First foundry core
- 74, 84, 87, 94:: Second foundry core
- 85, 88, 95:: Third core
- 86:: Fourth core
- 100:: Bag
- 101:: Lower mold
- 102:: Sealant

## Claims

1. A method for producing at least two flat-shaped products, each including a fiber reinforced resin, the method comprising the steps of:
providing a molding tool in which at least two cavity portions having the flat shapes of the at least two products are formed and superposed across a foundry core;
arranging a fiber base material in each of the at least two cavity portions of the molding tool;
injecting a resin material into the molding tool to impregnate the fiber base materials with the resin material; and
forming the at least two products by curing the resin material.

2. The method according to claim 1, wherein the at least two products have substantially the same shape.

3. The method according to claim 1 or 2, wherein a chain-curing resin composition is used for the resin material.

4. The method according to any one of claims 1 to 3, wherein each of the products is a composite material including a lightweight core and a fiber reinforced resin which is adjacent to at least a part of a surface of the lightweight core.

5. The method according to claim 4,wherein the fiber base material arranging step comprises arranging a second foundry core and a fiber base material adjacently to the second foundry core inside each of the cavity portions, the second foundry core including a part which has a shape substantially the same as a shape of a part of the lightweight core which is adjacent to the fiber reinforced resin, and
wherein the product forming step further comprises the steps of:
separating a cured resin including the fiber base material molded by the molding tool from the second foundry core after the resin material is cured; and
forming the composite materials by combining the lightweight core with the cured resin including the fiber base material.

6. The method according to claim 5, wherein the composite material forming step comprises combining the lightweight core with the cured resin including the fiber base material at a location which the part of the second foundry core having substantially the same shape as the lightweight core was positioned when the foundry core was arranged.

7. A device for producing at least two flat-shaped products, each including a fiber reinforced resin, the device comprising:
a molding tool configured to form the fiber reinforced resin by arranging fiber base materials inside at least two cavity portions having the flat shapes of the at least two products, injecting a resin material in the at least two cavity portions, impregnating the fiber base material with the resin material, and curing the resin material; and
a foundry core located intermediately between the at least two cavity portions so that the at least two cavity portions are superposed across the foundry core.

8. The device according to claim 7, wherein each of the products is a composite material including a lightweight core and a fiber reinforced resin which is adjacent to at least a part of a surface of the lightweight core, and
wherein the device further comprises a second foundry core inside the cavity portion, the second foundry core including a part which has a shape substantially the same as a shape of a part of the lightweight core which is adjacent to the fiber reinforced resin.

9. The device according to claim 8, wherein the part of the second foundry core having substantially the same shape as the lightweight core is positioned, inside the cavity portion, at a location at which the lightweight core is positioned in the composite material.
